# EUROPÄISCHE PATENTSCHRIFT

(11) **EP 0 604 835 B1**
(45) Veröffentlichungstag und Bekanntmachung des Hinweises auf die Patenterteilung: **04.03.1998**
(21) Anmeldenummer: 93120235.2
(22) Anmeldetag: 16.12.1993
(51) Int. Cl.: F16K 1/226

(54) **Klappenventil**
Butterfly valve
Robinet à papillon

(30) Priorität: 31.12.1992 DE 9217697 U
(43) Veröffentlichungstag der Anmeldung: 06.07.1994
(73) Patentinhaber: ARCA REGLER GmbH, D-47918 Tönisvorst (DE)
(72) Erfinder: Nägel, Heinz Daun, D-54550 Daun (DE)
(74) Vertreter: Paul, Dieter-Alfred, Dipl.-Ing.

(56) Entgegenhaltungen:
- EP-A- 0 116 530
- EP-A- 0 123 380
- EP-A- 0 160 828
- DE-U- 8 807 232

## Beschreibung

Die Erfindung bezieht sich auf ein Klappenventil mit folgenden Merkmalen:
a) das Klappenventil weist ein Gehäuse auf;
b) das Gehäuse hat eine Durchflußöffnung;
c) in der Durchflußöffnung ist eine Klappe schwenkbar gelagert;
d) zur Abdichtung zwischen Gehäuse und Klappe in deren Schließstellung ist eine ringförmige, vorzugsweise metallische Dichtungseinrichtung vorgesehen;
e) die Dichtungseinrichtung weist einen Dichtungsring und einen Klemmring auf;
f) der Dichtungsring hat einen radial elastischen Federabschnitt und einen sich von diesem radial nach innen erstreckenden, in Schließstellung am Umfang der Klappe anliegenden Dichtabschnitt;
g) der Federabschnitt ist im Bereich seines freien Endes zwischen Klemmring und Gehäuse abdichtend eingeklemmt,

Ein solches Klappenventil ist dem DE-GM 88 0̸7 232.0̸ zu entnehmen. Es hat ein Gehäuse mit kreisrunder Durchflußöffnung, in der eine Klappe doppelexzentrisch gelagert ist. Zur Abdichtung zwischen Gehäuse und Klappe in deren Schließstellung ist eine Dichtungseinrichtung vorgesehen, die im Grundsatz aus einem Dichtungsring und einem für die Befestigung des Dichtungsrings sorgenden Klemmring besteht. Der Dichtungsring hat einen radial elastischen Federabschnitt und einen sich von diesem radial nach innen erstreckenden, in Schließstellung am Umfang der Klappe anliegenden Dichtabschnitt.

Die Befestigung des Dichtungsrings erfolgt über den Federabschnitt im Bereich von dessen freien Ende, welches zwischen Klemmring und Gehäuse abdichtend eingeklemmt ist. Der Dichtungsring wird beim Verschwenken der Klappe aus der Offenin die Schließstellung auf Grund deren leicht elliptischen Umfangs deformiert, d. h. er wird in der Ebene der großen Ellipsenachse radial nach außen gedrückt, während er sich in der Ebene der kleinen Ellipsenachse zusammenzieht.

Bei dem bekannten Klappenventil ist der Federabschnitt als gerades Federblatt ausgebildet, das einstückig und mit einer Verdickung in den Dichtabschnitt übergeht, wobei Federabschnitt und Dichtabschnitt einen L-förmigen Querschnitt haben. Der im wesentlichen sich axial erstreckende Federabschnitt wird mit Hilfe des Klemmrings radial nach außen gegen das Gehäuse gepreßt. Die Kraft für die Verklemmung wird dabei durch Keilelemente mit sich radial erstreckenden Klemmschrauben aufgebracht.

Die Dichtungseinrichtung des vorbekannten Klappenventils hatte erhebliche Nachteile. So war die Klemmbefestigung nur mit einem erheblichen Fertigungsaufwand herzustellen. Außerdem mußte die Klemmschraube abgedichtet werden, so daß ein wiederholtes Lösen nur in begrenztem Umfang möglich war. Ein besonders gravierender Nachteil besteht darin, daß die Kraft, mit der der Dichtabschnitt an der Klappe in der Schließstellung anliegt, sehr stark von der Differenz der auf die beiden Seiten der Klappe wirkenden Drücke und von der Richtung des Differenzdruckes abhängig ist, was einerseits zu Leckagen und andererseits zu einer unerwünschten Erhöhung der Flächenpressung und damit erhöhtem Verschleiß führt.

In der EP-A-0̸ 160̸ 828 ist ein weiteres Klappenventil offenbart, bei dem der Dichtungsring als ein radial elastischer Federabschnitt in Form eines Radialbalgs ausgebildet ist. Der Radialbalg ist außenseitig zusätzlich mit einem Metallring verbunden, der zwischen zwei Gehäuseteilen eingeklemmt wird. Die Herstellung dieses Dichtungsrings ist kompliziert, da an dem Dichtabschnitt und an dem Metallring eine umlaufende Schweißnaht angeordnet werden muß. Es ist sehr schwierig, solche Schweißnähte absolut dicht auszuführen. Hinzu kommt, daß der Metallring an seinen beiden axialen Stirnseiten relativ großflächige Dichtflächen bildet, die nur bei äußerst sorgfältiger Bearbeitung dicht zu bekommen sind. Die Herstellung des Dichtungsrings bei diesem Klappenventil ist also aufwendig, und die Dichtungseinrichtung ist anfällig gegenüber Leckagen.

Der Erfindung liegt die Aufgabe zugrunde, die Dichtungseinrichtung bei einem Klappenventil der eingangs genannten Art so auszubilden, daß die Anlagekraft an der Klappe in Schließstellung im wesentlichen unabhängig vom wirkenden Differenzdruck ist. Ein weiteres Ziel besteht darin, die Dichtungsanordnung möglichst einfach auszubilden.

Die vorstehende Aufgabe wird erfindungsgemäß durch folgende Merkmale gelöst:
h) der Federabschnitt ist als Radialbalg ausgebildet, der in radialer Fortsetzung am Dichtabschnitt befestigt ist;
i) der Radialbalg weist an seinem radial außen liegenden Umfang einen schräg nach außen verlaufenden Klemmabschnitt auf;
j) der Klemmabschnitt ist über solche Klemmflächen befestigt, daß die Klemmkraft sowohl eine Axial- als auch eine Radialkraftkomponente hat;
k) der Radialbalg sowie seine Befestigung und seine Verklemmung sind derart ausgebildet, daß bei Druckbeaufschlagung die resultierende, auf den Dichtabschnitt wirkende Radialkraftkomponente im wesentlichen Null ist.

Nach der Erfindung ist also der Federabschnitt so gestaltet und auf solche Weise an dem Dichtabschnitt befestigt und mit dem Gehäuse verklemmt, daß die resultierende Radialkraft bei Auftreten eines Differenzdruckes im Vergleich zu dem vorbekannten Klappenventil so gering und vorzugsweise im wesentlichen Null ist, daß einerseits keine Leckagen und andererseits kein erhöhter Verschleiß auftreten. Die im einzelnen zumindest am Radialbalg auftretenden Radialkraftkomponenten sollen sich also im wesentlichen ausgleichen.

In Ausgestaltung der Erfindung ist vorgesehen, daß die Verklemmung des Radialbalges und seine Befestigung am Dichtabschnitt in einer gemeinsamen Radialebene liegen. Dabei ist unter Radialbalg eine ringförmige Wandung aus dünnem, elastisch verformbarem Material, beispielsweise einem Metallblech, zu verstehen, das in axialer Richtung ein- oder mehrfach ausgebeult ist, damit es in radialer Richtung elastisch federn kann.

In Ausbildung der Erfindung ist vorgesehen, daß der Radialbalg im Querschnitt im wesentlichen Halbkreisform hat, weil diese Form besonders einfach ist.

Der Klemmring ist im Bereich der Anlage am Radialbalg zweckmäßigerweise konusförmig ausgebildet. Von dem Gehäuse sollte dann vorteilhafterweise innenseitig ein Klemmsteg vorspringen, um eine hohe Flächenpressung zu erzielen.

Besonders vorteilhaft ist auch, wenn der Klemmring axial verschieblich gelagert und auf der dem Dichtungsring abgewandten Seite von einem Schraubring beaufschlagt ist. Hierdurch sind keine besonderen Bearbeitungsmaßnahmen notwendig. Außerdem kann auf besondere Dichtungsmaßnahmen verzichtet werden.

Schließlich ist gemäß der Erfindung vorgesehen, daß der Dichtabschnitt in axialer Richtung auf der einen Seite von dem Klemmring und auf der anderen Seite vom Gehäuse geführt ist, wodurch gesichert ist, daß sich der Dichtabschnitt nur noch radial bewegen kann.

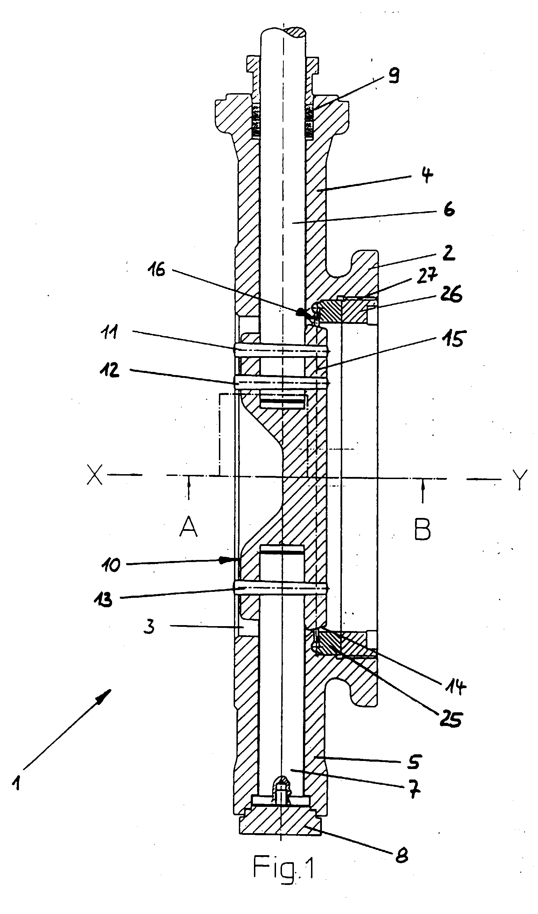

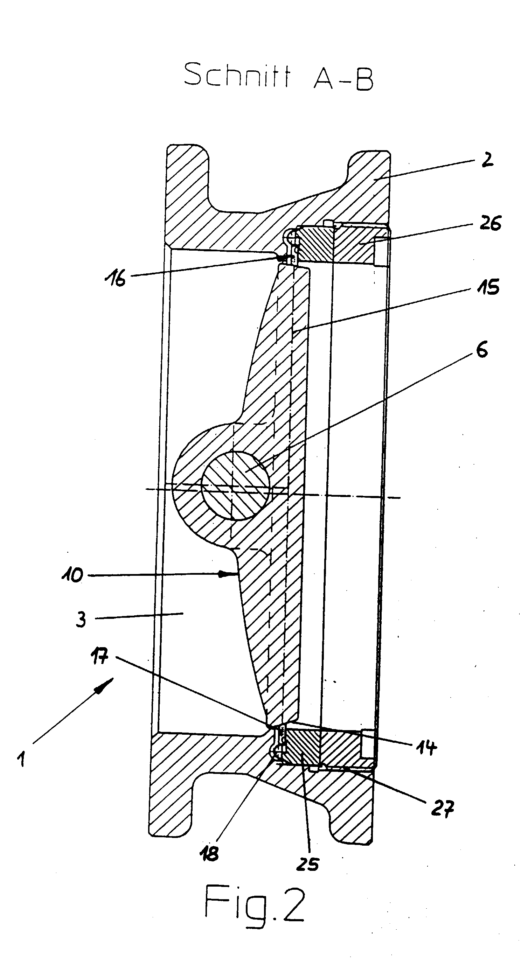

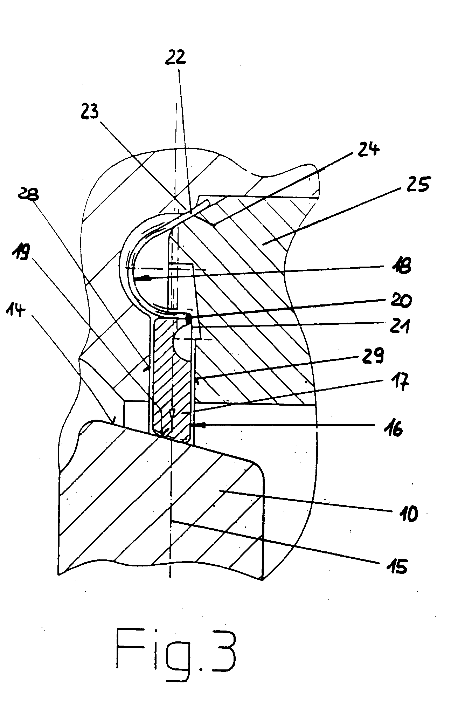

In der Zeichnung ist die Erfindung an Hand eines Ausführungsbeispiels näher veranschaulicht. Es zeigen:
- Figur (1): einen Horizontalschnitt durch ein Klappenventil;
- Figur (2): einen Vertikalschnitt durch das Klappenventil gemäß Figur (1) und
- Figur (3): eine Ausschnittvergrößerung des Horizontalschnittes gemäß Figur (1) mit Dichtungsanordnung.

Das in den Figuren dargestellte Klappenventil (1) weist ein im wesentlichen rohrförmiges Gehäuse (2) mit einer kreisförmigen Durchflußöffnung (3) auf. Wie aus der Darstellung gemäß Figur (1) zu ersehen ist, hat das Gehäuse (2) auf beiden Seiten Fortsätze (4, 5), in denen jeweils Klappenachsenabschnitte (6, 7) gelagert sind. Der in Figur (1) untere Fortsatz (5) ist mit einem Deckel (8) verschlossen, während der Klappenachsenabschnitt (6) aus dem oberen Fortsatz (4) herausragt, um mit einer hier nicht näher dargestellten Betätigungseinrichtung verbunden werden zu können. Dort ist auch eine Stopfbuchse (9) zur Abdichtung vorhanden.

Die Klappenachsenabschnitte (6, 7) ragen jeweils in eine Klappe (10) hinein, die in den Figuren in geschlossener Stellung, d. h. senkrecht zur Durchflußrichtung, gezeigt ist. Die Befestigung der Klappenachsenabschnitte (6, 7) mit der Klappe (10) geschieht über zwei bzw. einen Keilstift (11, 12, 13), welche sich in Durchflußrichtung durch die Klappe (10) und die Klappenachsenabschnitte (6) bzw. (7) erstrecken und so für eine formschlüssige Verbindung sorgen.

Die Klappe (10) weist eine konische Dichtfläche (14) auf, deren Ebene (15) exzentrisch zur Achse der Klappenachsenabschnitte (6, 7) liegt, wie insbesondere aus Figur (2) zu entnehmen ist. Aus dieser Darstellung ergibt sich zudem, daß die Klappenachsenabschnitte (6, 7) auch exzentrisch zur Achse der Durchflußöffnung (3) liegen. Die Dichtfläche (14) hat eine von der genauen Kreisform leicht abweichende, elliptische Kontur, wobei sich die große Ellipsenachse senkrecht zur Achse der Klappenachsenabschnitte (6, 7) und die kleine Ellipsenachse parallel dazu erstrecken. In der gezeigten Schließstellung liegt die Klappe (10̸) über die Dichtfläche (14) an einem metallischen Dichtungsring (16) an, der normalerweise Kreisform hat, auf Grund der elliptischen Kontur jedoch entsprechend verformt ist und rundum an der Dichtfläche (14) abdichtend anliegt.

Wie aus Figur (3) deutlicher zu sehen ist, besteht der Dichtungsring (16) aus einem ringförmigen Dichtabschnitt (17) und einem sich daran in radialer Richtung anschließenden, im Querschnitt im wesentlichen halbkreisförmigen Radialbalg (18), welcher den Dichtabschnitt (17) über den gesamten Umfang umgibt. Der Dichtabschnitt (17) hat im wesentlichen Rechteckform, wobei seine Berührungsfläche (19) in der Neigung an die der Dichtfläche (14) angepaßt ist.

Der Radialbalg (18) ist am Außenumfang des Dichtabschnittes (17) mittels einer Schweißnaht (20) befestigt. Zur besseren Anbringung der Schweißnaht (20) ist unmittelbar benachbart in die Seite des Dichtabschnittes (17) eine halbkreisförmige Nut (21) eingeformt. Von der Schweißnaht (20̸) geht ein im wesentlichen halbkreisförmiger Abschnitt des Radialbalgs (18) aus, der zum Ende hin in einen geraden Abschnitt (22) übergeht. Dieser ist zwischen einem vom Gehäuse (2) vorspringenden Ringsteg (23) und einer Konusfläche (24) eines Klemmrings (25) statisch abdichtend eingeklemmt. Auf den Klemmring (25) wirkt eine auf den Ringsteg (23) gerichtete Axialkraft, welche - wie sich aus den Figuren (1) und (2) ergibt - von einem Schraubring (26) ausgeübt ist, der in ein Gewinde (27) im Gehäuse (2) eingeschraubt ist. Mit Hilfe des Gewinderings (26) kann die Klemmkraft, die auf den geraden Abschnitt (22) des Radialbalges (18) wirkt, entsprechend den jeweiligen Erfordernissen angepaßt werden.

Der Ringsteg (23) ist in einer Radialebene angeordnet, die im wesentlichen mit der Radialebene zusammenfällt, in der auch die Schweißnaht (20̸) liegt. Dies hat zur Folge, daß sich die an dem Radialbalg (18) wirkenden Kraftkomponenten, wenn an der Klappe (10̸) ein Differenzdruck zwischen Vorder- und Hinterseite auftritt, in radialer Richtung ausgleichen, so daß die Anlagekraft, die zwischen Dichtfläche (14) und Berührungsfläche (19) wirkt, im wesentlichen unabhängig vom Differenzdruck ist.

Das Gehäuse (2) und der Klemmring (25) sind im Bereich des Dichtungsabschnittes (17) so ausgebildet, daß dort parallele Führungsflächen (28, 29) entstehen, welche den Dichtungsabschnitt (17) beidseitig mit einem geringen Spiel von 0̸,1 bis 0̸,2 mm in axialer Richtung führen, so daß er sich im wesentlichen nur radial bewegen kann.

## Patentansprüche

1. Klappenventil (1) mit folgenden Merkmalen:
a) das Klappenventil (1) weist ein Gehäuse (2) auf;
b) das Gehäuse (2) hat eine Durchflußöffnung (3);
c) in der Durchflußöffnung (3) ist eine Klappe (10̸) schwenkbar gelagert;
d) zur Abdichtung zwischen Gehäuse (2) und Klappe (10̸) in deren Schließstellung ist eine ringförmige Dichtungseinrichtung vorgesehen;
e) die Dichtungseinrichtung weist einen Dichtungsring (16) und einen Klemmring (25) auf;
f) der Dichtungsring (16) hat einen radial elastischen Federabschnitt (18) und einen sich von diesem radial nach innen erstreckenden, in Schließstellung am Umfang der Klappe (10̸) anliegenden Dichtabschnitt (17);
g) der Federabschnitt (18) ist im Bereich seines freien Endes zwischen Klemmring (25) und Gehäuse (2) abdichtend eingeklemmt,
gekennzeichnet durch folgende Merkmale:
h) der Federabschnitt ist als Radialbalg (18) ausgebildet, der in radialer Fortsetzung am Dichtabschnitt (17) befestigt ist;
i) der Radialbalg (18) weist an seinem radial außen liegenden Umfang einen schräg nach außen verlaufenden Klemmabschnitt (22) auf;
j) der Klemmabschnitt (22) ist über solche Klemmflächen (23, 24) befestigt, daß die Klemmkraft sowohl eine Axial- als auch eine Radialkraftkomponente hat;
k) der Radialbalg (18) sowie seine Befestigung und Verklemmung sind derart ausgebildet, daß bei Druckbeaufschlagung die resultierende, auf den Dichtabschnitt (17) wirkende Radialkraftkomponente im wesentlichen Null ist.

2. Klappenventil nach Anspruch 1,
dadurch gekennzeichnet, daß die Verklemmung des Radialbalgs (18) und seine Befestigung am Dichtabschnitt (17) im wesentlichen in einer gemeinsamen Radialebene liegen.

3. Klappenventil nach Anspruch 1 oder 2,
dadurch gekennzeichnet, daß der Radialbalg (18) im Querschnitt im wesentlichen Halbkreisform hat.

4. Klappenventil nach einem der Ansprüche 1 bis 3,
dadurch gekennzeichnet, daß der Klemmring (25) im Bereich der Anlage am Radialbalg (18) konusförmig ausgebildet ist.

5. Klappenventil nach Anspruch 4,
dadurch gekennzeichnet, daß von dem Gehäuse (2) innenseitig ein Klemmsteg (23) vorspringt.

6. Klappenventil nach einem der Ansprüche 1 bis 5,
dadurch gekennzeichnet, daß der Klemmring (25) axial verschieblich gelagert und auf der dem Dichtungsring (16) abgewandten Seite von einem Schraubring (26) beaufschlagt ist.

7. Klappenventil nach einem der Ansprüche 1 bis 6,
dadurch gekennzeichnet, daß der Dichtabschnitt (17) in axialer Richtung auf der einen Seite von dem Klemmring (25) und auf der anderen Seite vom Gehäuse (2) geführt ist.

## Claims

1. A butterfly valve (1) having the following features:
a) the butterfly valve (1) has a housing (2);
b) the housing (2) has a flow aperture (3);
c) a vane (10) is swivel-mounted in the flow aperture (3);
d) an annular sealing device is provided for sealing between the housing (2) and the vane (10) in the closed position thereof;
e) the sealing device comprises a sealing ring (16) and a clamping ring (25);
f) the sealing ring (16) has a radially elastic spring section (18) and a sealing section (17) which extends radially inwards therefrom and which in the closed position is seated against the periphery of the vane (10);
g) the spring section (18) is clamped in the region of its free end, forming a seal, between the clamping ring (25) and the housing (2),
characterised by the following features:
h) the spring section is constructed as a radial bellows (18) which is fixed to the sealing section (17) as a radial continuation;
i) the radial bellows (18) has a clamping section (22) running outwards at a slant at its radially outer periphery;
j) the clamping section (22) is fixed via clamping faces (23, 24) such that the clamping force has both an axial and a radial component of force;
k) the radial bellows (18), and the fixation and clamping thereof, are constructed in such a way that on the action of pressure the resulting radial component of force which acts on the sealing section (17) is substantially zero.

2. A butterfly valve according to claim 1,
characterised in that the clamping of the radial bellows (18) and its fixation to the sealing section (17) substantially lie in a common radial plane.

3. A butterfly valve according to claim 1 or 2,
characterised in that the radial bellows (18) has a substantially semicircular shape in cross-section.

4. A butterfly valve according to any one of claims 1 to 3,
characterised in that the clamping ring (25) is of tapered construction in the region of its contact with the radial bellows (18).

5. A butterfly valve according to claim 4,
characterised in that a clamping rib (23) protrudes from the inside of the housing (2).

6. A butterfly valve according to any one of claims 1 to 5,
characterised in that the clamping ring (25) is mounted so that it is axially displaceable and is acted upon by a threaded ring (26) on its side remote from the sealing ring (16).

7. A butterfly valve according to any one of claims 1 to 6,
characterised in that the sealing section (17) is guided in the axial direction on one side by the clamping ring (25) and on the other side by the housing (2).

## Revendications

1. Robinet à papillon (1) ayant les particularités suivantes:
a) le robinet à papillon (1) comporte un corps (2);
b) le corps (2) possède une ouverture de passage (3);
c) un papillon (10) est monté pivotant dans l'ouverture de passage (3);
d) un dispositif annulaire d'étanchéité est prévu pour assurer l'étanchéité entre le corps (2) et le papillon (10) à sa position fermée;
e) le dispositif d'étanchéité comporte un anneau d'étanchéité (16) et un anneau de serrage (25);
f) l'anneau d'étanchéité (16) possède une partie à ressort (18) radialement élastique et une partie d'étanchéité (17) s'étendant radialement vers l'intérieur à partir d'elle et appliquée contre le pourtour du papillon (10) en position fermée; et
g) la partie à ressort (18) est serrée de façon étanche, au droit de son extrémité libre, entre l'anneau de serrage (25) et le corps (2),
caractérisé en ce que:
h) la partie à ressort est réalisée comme un soufflet radial (18) fixé à la partie d'étanchéité (17) dans le prolongement radial de celle-ci;
i) le soufflet radial (18) comporte, à sa périphérie située radialement à l'extérieur, une partie de serrage (22) s'étendant obliquement vers l'extérieur;
j) la partie de serrage (22) est fixée par des surfaces de serrage (23, 24) telles que la force de serrage possède à la fois une composante de force axiale et une composante de force radiale; et
k) le soufflet radial (18), de même que sa fixation et son serrage, sont réalisés de manière qu'en cas d'application d'une pression, la composante de force radiale résultante agissant sur la partie d'étanchéité (17) soit sensiblement nulle.

2. Robinet à papillon selon la revendication 1, caractérisé en ce que le serrage du soufflet radial (18) et sa fixation à la partie d'étanchéité (17) sont situés essentiellement dans un plan radial commun.

3. Robinet à papillon selon la revendication 1 ou 2, caractérisé en ce que le soufflet radial (18) possède en section droite une forme essentiellement en demi-cercle.

4. Robinet à papillon selon une des revendications 1 à 3, caractérisé en ce que l'anneau de serrage (25) est réalisé avec une forme conique dans la zone d'application contre le soufflet radial (18).

5. Robinet à papillon selon la revendication 4, caractérisé en ce qu'une nervure de serrage (23) fait saillie à l'intérieur du corps (2).

6. Robinet à papillon selon une des revendications 1 à 5, caractérisé en ce que l'anneau de serrage (25) est monté axialement mobile et sollicité par un anneau à vis (26) sur le côté éloigné de l'anneau d'étanchéité (16).

7. Robinet à papillon selon une des revendications 1 à 6, caractérisé en ce que la partie d'étanchéité (17) est guidée en direction axiale, d'un côté par l'anneau de serrage (25) et de l'autre côté par le corps (2).
